# EUROPÄISCHE PATENTSCHRIFT

(11) **EP 1 503 911 B1**
(45) Veröffentlichungstag und Bekanntmachung des Hinweises auf die Patenterteilung: **23.08.2006**
(21) Anmeldenummer: 03720546.5
(22) Anmeldetag: 30.04.2003
(51) Int. Cl.: B60C 23/06

(54) **VERFAHREN ZUR ERKENNUNG DER GERADEAUSFAHRT AUF BASIS VON RADDREHZAHLINFORMATIONEN**
METHOD FOR DETECTING STRAIGHT-AHEAD DRIVING BASED ON INFORMATION ON THE ROTATIONAL SPEED OF A WHEEL
PROCEDE DE RECONNAISSANCE DE SORTIE RECTILIGNE SUR LA BASE D'INFORMATIONS DE VITESSE DE ROTATION DE ROUE

(30) Priorität: 03.05.2002 DE 10219933
(43) Veröffentlichungstag der Anmeldung: 09.02.2005
(73) Patentinhaber: Continental Teves AG & Co. oHG, 60488 Frankfurt (DE); Continental AG, 30165 Hannover (DE)
(72) Erfinder: GRIESSER, Martin, 65760 Eschborn (DE); KÖBE, Andreas, 64625 Bensheim (DE); EDLING, Frank, 65929 Frankfurt (DE); KOUKES, Vladimir, 64297 Darmstadt (DE)
(86) Internationale Anmeldenummer: PCT/EP2003/004525
(87) Internationale Veröffentlichungsnummer: WO 2003/093035

(56) Entgegenhaltungen:
- EP-A- 0 712 740
- EP-A- 0 897 816
- EP-A- 0 979 763
- DE-A- 10 058 140

## Beschreibung

Die Erfindung betrifft ein Verfahren gemäß Oberbegriff von Anspruch 1 sowie ein Computerprogrammprodukt gemäß Anspruch 10.

In Kraftfahrzeugen mit Bremssystemen die eine ABS-Regelung, eine Fahrdynamikregelung oder dergleichen aufweisen, werden in elektronischen Regelgeräten üblicherweise verschiedenste Verfahren zur Erkennung von Fahrsituationen durch einen Mikroprozessor ausgeführt. In praktisch allen Verfahren zur Erkennung der Fahrsituation werden Eingangssignale von Raddrehzahlsensoren zur Erkennung der Fahrsituation entweder alleine oder gemeinsam mit weiteren Sensoren (Gierrate, Querbeschleunigung etc.) ausgewertet, sofern diese weiteren Sensoren (sogenannte ESP-Sensorik) im Fahrzeug vorhanden sind.

Es ist zum Beispiel aus der DE-A 100 58 140 bekannt, dass Reifendruckverluste alleine auf Basis von Raddrehzahlinformationen erkannt werden können. Eine wesentliche Voraussetzung für eine hochqualitative Erkennung ist die zuverlässige Erkennung von für die Ermittlung von Daten geeigneten Fahrsituationen. Eine besonders geeignete Fahrsituation zur Ermittlung von Daten ist die Geradeausfahrt des Fahrzeugs.

Gemäß der DE-A 100 58 140 wurde versucht, die Gierrate oder die Querbeschleunigung aus den Raddrehzahlinformationen möglichst genau zu bestimmen, um eine Geradeausfahrt festzustellen.

Die vorliegende Erfindung weicht von diesem Gedanken ab und berücksichtigt statt dessen aus den Radgeschwindigkeiten berechnete invertierte Kurvenradien. Eine Betrachtung der invertierten Kurvenradien führt zu einer höheren Genauigkeit, wenn dieses Prinzip in einem an sich bekannten Druckverlusterkennungsverfahren auf Basis von Raddrehzahlsensoren (DDS: Deflation Detection System, siehe EP-A 0 983 154) verwendet wird.

Weiterhin ist in der EP 0 897 816 A2 eine Vorrichtung und ein Verfahren zur Bewarnung eines Reifenluftdruckverlusts beschrieben, wobei Raddrehzahlen zur Erkennung eines Reifenluftdruckverlustes ausgewertet werden, und wobei aus den Raddrehzahlen reziproke Kurvenradien bestimmt werden.

Ferner ist aus der EP 0 712 740 A2 ein Verfahren und eine Vorrichtung zur Berechnung des Kurvenradius eines Fahrzeugs bekannt, wobei der Kurvenradius aus den Radwinkelgeschwindigkeiten der linken und rechten Räder bestimmt wird.

Aus der EP 0 979 763 A2 ist ein Verfahren zur Bestimmung des Kurvenradius bekannt, in welchem die Differenz der Radgeschwindigkeiten von mindestens zwei Fahrzeugrädern gemessen und daraus die Gierrate des Fahrzeugs und der Kehrwert des Kurvenradius ermittelt wird.

Die Erfindung betrifft ein Verfahren gemäß Anspruch 1.

Der besagte Kehrwert wird vorzugsweise von dem Vorderrad/Hinterrad-Drehzahverhältnis abgeleitet. Gemäß einer weiteren bevorzugten Ausführungsform der Erfindung wird sowohl für die Vorderachse als auch für die Hinterachse getrennt ein invertierter Kurvenradius gebildet und insbesondere eingelernt.

Der Kehrwert wird insbesondere mathematisch gefiltert nach einem an sich bekannten Algorithmus. Dieser Algorithmus ist vorzugsweise ein rekursives Filterverfahren, welches den Vorteil eines geringen Speicherplatzverbrauchs hat, wie z. B. in der DE 100 34 224 A1 beschrieben.

Während der Kehrwert-Lernphase werden aktuelle geeignete Kurvenwerte eingelernt, so dass sich die statistische Qualität des Lernwertes normalerweise ständig verbessert. Vorzugsweise wird nach einiger Zeit, wenn eine geeignet zu wählende Streuungsgröße einen Schwellwert unterschreitet, die Lernphase beendet. Geeignete Kurvenwerte sind bevorzugt solche, für die der invertierte Kurvenradius einen vorgegebenen Schwellenwert unterschreitet.

In der Vergleichsphase, welche sich an die Lernphase nach Abschluss der Lernphase anschließt, wird bevorzugt nur dann das DDS-System deaktiviert, wenn an beiden Achsen gleichzeitig eine Kurvenfahrt festgestellt wird (ebenfalls Schwellwertbetrachtung). Daher kann ein an einer Achse auftretender Druckverlust das System nicht deaktivieren.

Die aktuell ermittelte Kurvenkenngröße wird bevorzugt gemittelt und/oder gefiltert. Vorzugsweise wird auch die eingelernte Kurvenkenngröße gemittelt und/oder gefiltert.

Gemäß der Erfindung werden die Kurvenkenngrößen für mehrere Geschwindigkeitsintervalle individuell eingelernt, z. B. in einem ersten Geschwindigkeitsintervall von 15 km/h bis 70 km/h, in einem zweiten Geschwindigkeitsintervall von 70 km/h bis 100 km/h, in einem dritten Geschwindigkeitsintervall von 100 km/h bis 130 km/h usw.

Die Kurvenkenngröße wird bevorzugt in der Fahrsituation "Geradeausfahrt" eingelernt, wobei zur Erkennung dieses Fahrzustandes ein zweites Geradeausfahrterkennungsverfahren eingesetzt wird.

Eine grobe Erkennung von Geradeausfahrt lässt sich über ein separates Verfahren (zweites Geradausfahrterkennungsverfahren) durchführen. Vorzugsweise werden bei Erkennung einer Kurvenfahrt durch das zweite Geradeausfahrterkennungsverfahren bereits eingelernte Werte des ersten Geradeausfahrterkennungsverfahrens verworfen. Dieses zweite Verfahren erkennt insbesondere auch, wenn die Annahme "Geradeausfahrt" zum Lernen der invertierenden Kurvenradien nicht genau genug war. Das Lernen wird dann verworfen. Aus einer geschätzten Gierrate und Querbeschleunigung können Kriterien zum Aktiviere/Deaktivieren von DDS abgeleitet werden.

Die eingelernte/n Kurvenkenngröße/n wird/werden bevorzugt zur Berechnung von realen Fahrparametern, wie Kurvenradius, Fahrzeuggierrate und/oder -querbeschleunigung herangezogen.

Vorzugsweise wird die eingelernte Kurvenkenngröße zur Berechnung des Fahrparameters "tatsächlicher Kurvenradius" herangezogen.

Das erste Verfahren zur Kurvenfahrterkennung ist bevorzugt in ein Verfahren zum Erkennen eines Reifendruckverlustes auf Basis von Raddrehzahlinformationen integriert. Das erste Verfahren zur Kurvenfahrterkennung wird dabei insbesondere zum Aktivieren und/oder Deaktivieren dieses Druckverlusterkennungsverfahrens herangezogen.

Die oben erwähnten Fahrparameter, wie z. B. Gierrate oder Querbeschleunigung, werden bevorzugt zum Aktivieren und/oder Deaktivieren der Druckverlusterkennung herangezogen.

Im Folgenden wird das Verfahren zur Erkennung der Geradeausfahrt unter Berücksichtigung des in der DE 100 58 140 A1 beschriebenen Verfahrens zur Druckverlusterkennung von Reifen in Kraftfahrzeugen erläutert. In der DE 100 58 140 A1 wird bereits ein Verfahren zur Geradeausfahrterkennung auf Basis von Gierrateninformationen beschrieben. Die Geradeausfahrterkennung bzw. die Kurvenfahrterkennung stellt für ein auf Raddrehzahlinformationen basierendes Reifendruckverlusterkennungsverfahren eine wichtige Ausgangsgröße dar. Durch eine Kurvenfahrt weicht z. B. die Raddrehzahl eines kurveninneren Rades von der Raddrehzahl eines kurvenäußeren Rades ab. Ein bekanntes Reifendruckverlusterkennungsverfahren kann nicht erkennen, ob die Drehzahländerung durch einen Druckverlust oder durch eine Kurvenfahrt hervorgerufen wird, wodurch es zu unerwünschten Fehlwarnungen kommen kann bzw. nur sehr lange Beobachtungszeiten für eine Warnung angewendet werden dürfen. Deshalb ist es für eine sichere und schnelle Druckverlusterkennung unbedingt notwendig, dass eine Kurvenfahrt bzw. eine Geradeausfahrt sicher erkannt wird. Das bekannte Reifendruckverlusterkennungsverfahren benutzen hierzu einen Gierratensensor, welcher z. B. bei einem ESP-System vorhanden ist. Da nicht alle Fahrzeuge über eine ESP-System verfügen, beschreibt das erfindungsgemäße Verfahren eine Geradeausfahrterkennung auf Basis der vorhandenen Raddrehzahlsensoren. Das im folgenden beschriebene Verfahren wird insbesondere in Verbindung mit einem Reifendruckverlusterkennungsverfahren eingesetzt, wobei das Reifendruckverlusterkennungsverfahren erst durchgeführt wird, wenn das Geradeausfahrterkennungsverfahren eine Geradeausfahrt erkannt hat, bzw. wird das Reifendruckverlusterkennungsverfahren nicht durchgeführt, wenn das Kurvenerkennungsverfahren eine Kurvenfahrt erkannt hat. Die Geradeausfahrterkennung bzw. die Kurvenfahrterkennung sind hierbei als äquivalent anzusehen, da es unerheblich ist, ob das Reifendruckverlusterkennungsverfahren erst nach Erkennen einer Geradeausfahrt durchgeführt wird, oder durch Erkennen einer Kurvenfahrt unterbrochen wird.

Das erfindungsgemäße Verfahren wird wie das bekannte Reifendruckverlusterkennungsverfahren (DDS) durch Betätigen eines Resettasters gestartet. Hierzu ist es notwendig, dass der Fahrer vor dem Betätigen des Resettasters alle Reifen auf den vorgeschriebenen Solldruck gebracht hat. Da selbst Reifen des selben Typs zueinander Abweichungen hinsichtlich z. B. ihrer Abrollradien oder ihrer geschwindigkeitsabhängigen Ausdehnung aufweisen, ist es notwendig, diese Reifenungleichförmigkeiten einzulernen. Diese Reifenungleichförmigkeiten werden in einer Lernphase als sogenannte Offsetwerte in Form von gelernten invertierten Kurvenradien pro Fahrzeugachse in unterschiedlichen Geschwindigkeitsintervallen eingelernt. Der gelernte invertierte Kurvenradius setzt sich hierbei im wesentlichen aus einem Quotienten zusammen, wobei im Zähler die Differenz der Radgeschwindigkeiten einer Achse, bzw. der Radgeschwindigkeiten proportionale Werte, stehen, während sich der Nenner aus der Multiplikation der Fahrzeugspurweite und der Fahrzeugreferenzgeschwindigkeit zusammensetzt. Als Fahrzeugreferenzgeschwindigkeit wird hierbei z. B. die durch ein ABS berechnete Fahrzeuggeschwindigkeit benutzt. Weiterhin kann der Quotient durch zusätzliche Skalierungsfaktoren erweitert werden, um die gelernten invertierten Kurvenradien in sinnvolle Wertebereiche (z. B. für Integer-Rechnung) zu verschieben. Es wird für jede Fahrzeugachse ein invertierter Kurvenradius gelernt, wobei aus diesen gelernten invertierten Kurvenradien noch zusätzlich Werte, welche eine Gierrate oder eine Querbeschleunigung beschreiben, bestimmt werden können. Die gelernten invertierten Kurvenradien und die zusätzlichen Werte (Gierrate, Querbeschleunigung) werden in einem Speicher (EEPROM) gespeichert. Die gelernten invertierten Kurvenradien können zusätzlich noch nach allgemein bekannten Algorithmen gefiltert und gespeichert werden. Während der Kehrwert-Lernphase bleibt das Reifendruckverlusterkennungsverfahren (DDS) deaktiviert. Die Kehrwert-Lernphase wird beendet, wenn eine geeignet zu wählende Streuungsgröße einen Schwellwert unterschreitet. Dennoch werden weiterhin die invertierten Kurvenradien in einem Langzeitspeicher gespeichert und laufend mit aktuell ermittelten invertierten Kurvenradien verglichen um sicherzugehen, dass die in der Kehrwert-Lernphase bestimmte Geradeausfahrt tatsächlich vorlag, und nicht etwa eine langgezogenen Kurvenfahrt.

In einer anschließenden Vergleichsphase werden aktuell ermittelte invertierte Kurvenradien für jede Achse, wie in der Kehrwert-Lernphase beschrieben, aus den Raddrehzahlen bestimmt. Diese aktuellen ermittelten invertieren Kurvenradien werden mit den gelernten invertierten Kurvenradien verglichen. Wird an beiden Achsen gleichzeitig eine Kurvenfahrt erkannt, so wird das DDS deaktiviert. Zeigt nur eine Achse eine Geradeausfahrt an, so bleibt DDS aktiv.

Alternativ kann auch nur die freirollende Achse als Referenz für eine Geradeausfahrt verwendet werden. Da es an der angetriebenen Achse durch eine Überlagerung einer Kurvenfahrt mit einem Antriebsmoment an einem oder beiden angetriebenen Rädern zu einer Fehlinterpretation hinsichtlich einer vorliegenden Geradeausfahrt kommen kann. Hierbei werden weiterhin die invertierten Kurvenradien wie oben beschrieben in dem Langzeitspeicher überwacht. Wird durch einen Vergleich der in dem Langzeitspeicher abgelegten Werte für die gelernten invertierten Kurvenradien erkannt, dass ein aktuell ermittelter invertierter Kurvenradius eher eine Geradeausfahrt beschreibt, so wird ein Neustart der Kehrwert-Lernphase durchgeführt. Aus den ermittelten invertierten Kurvenradien können ebenfalls wieder Werte für eine ermittelte Gierrate und eine ermittelte Querbeschleunigung bestimmt werden. Damit gelingt auch im Falle eines Druckverlustes an der freirollenden Achse weiterhin eine qualitativ gute Geradeausfahrterkennung.

Das erfindungsgemäße Verfahren wird vorzugsweise zum Aktivieren oder Deaktivieren eines Reifendruckverlusterkennungsverfahrens (DDS) eingesetzt, welches einen Druckverlust auf Basis der Raddrehzahlinformationen bestimmt. Als Auswahlkriterien können hierbei entweder die invertierten Kurvenradien oder die daraus berechneten Gierraten bzw. Querbeschleunigungen verwendet werden.

## Patentansprüche

1. Verfahren zur Erkennung der Geradeausfahrt nach einem ersten Geradeausfahrterkennungsverfahren auf Basis von Raddrehzahlinformationen, wobei eine Kurvenkenngröße aus den Raddrehzahlinformationen einer oder mehrerer Achsen gebildet wird und zur Ermittlung der Kurvenkenngröße der Kehrwert des Kurvenradius aus den Raddrehzahlinformationen berechnet wird, **dadurch gekennzeichnet, dass** ein Einlernen der Kurvenkenngröße in einer Lernphase, insbesondere in ausgewählten Fahrsituationen, durchgeführt wird, wobei die Kurvenkenngröße für mehrere Geschwindigkeitsintervalle individuell eingelernt wird.

2. Verfahren nach Anspruch 1, **dadurch gekennzeichnet, dass** die aktuell ermittelte Kurvenkenngröße gemittelt und/oder gefiltert wird.

3. Verfahren nach Anspruch 1 oder 2, **dadurch gekennzeichnet, dass** die eingelernte Kurvenkenngröße gemittelt und/oder gefiltert wird.

4. Verfahren nach mindestens einem der Anspruch 1 bis 3, **dadurch gekennzeichnet, dass** die Kurvenkenngröße in der Fahrsituation "Geradeausfahrt" eingelernt wird, wobei zur Erkennung dieses Fahrzustandes ein zweites Geradeausfahrterkennungsverfahren eingesetzt wird.

5. Verfahren nach mindestens einem der Ansprüche 1 bis 4, **dadurch gekennzeichnet, dass** bei Erkennung einer Kurvenfahrt durch das zweite Geradeausfahrterkennungsverfahren bereits eingelernte Werte des ersten Geradeausfahrterkennungsverfahrens verworfen werden.

6. Verfahren nach mindestens einem der Anspruch 1 bis 5, **dadurch gekennzeichnet, dass** die eingelernte/n Kurvenkenngröße/n zur Berechnung von Fahrparametern, wie Fahrzeuggierrate und/oder -querbeschleunigung herangezogen wird/werden.

7. Verfahren nach mindestens einem der Anspruch 1 bis 6, **dadurch gekennzeichnet, dass** die eingelernte Kurvenkenngröße zur Berechnung des Fahrparameters "tatsächlicher Kurvenradius" herangezogen wird.

8. Verfahren nach mindestens einem der Anspruch 1 bis 7, **dadurch gekennzeichnet, dass** das erste Verfahren zur Kurvenfahrterkennung in ein Verfahren zum Erkennen eines Reifendruckverlustes auf Basis von Raddrehzahlinformationen integriert ist und das erste Verfahren zur Kurvenfahrterkennung insbesondere zum Aktivieren und/oder Deaktivieren dieses Druckverlusterkennungsverfahrens herangezogen wird.

9. Verfahren nach Anspruch 8, **dadurch gekennzeichnet, dass** zum Aktivieren und/oder Deaktivieren die Fahrparameter gemäß einem der Ansprüche 6 oder 7 herangezogen werden.

10. Computerprogrammprodukt zur Durchführung aller Schritte eines geradeaus fahrterkennungsverfahrens nach einem der Ansprüche 1-9.

## Claims

1. Method for detecting straight-ahead driving according to a first straight-ahead driving detection method on the basis of wheel speed information, wherein a curve parameter is produced from the information of wheel speed on one or more axles, and the reciprocal value of the curve radius is calculated from the wheel speed information to determine the curve parameter,
**characterized in that** the curve parameter is learnt in a learning phase, in particular in selected driving situations, with the curve parameter being learnt individually for several speed intervals.

2. Method as claimed in claim 1,
**characterized in that** the currently determined curve parameter is averaged and/or filtered.

3. Method as claimed in claim 1 or 2,
**characterized in that** the learnt curve parameter is averaged and/or filtered.

4. Method as claimed in at least any one of claims 1 to 3,
**characterized in that** the curve parameter is learnt in the driving situation 'straight-ahead driving', and a second straight-ahead driving detection method is used for detecting this driving condition.

5. Method as claimed in at least any one of claims 1 to 4,
**characterized in that** values of the first straight-ahead driving detection method that have been learnt already are ignored when a cornering maneuver is detected by means of the second straight-ahead driving detection method.

6. Method as claimed in at least any one of claims 1 to 5,
**characterized in that** the learnt curve parameter(s) is(are) taken into account to calculate driving parameters such as the vehicle yaw rate and/or the vehicle lateral acceleration.

7. Method as claimed in at least any one of claims 1 to 6,
**characterized in that** the learnt curve parameter is taken into account for calculating the driving parameter 'actual curve radius'.

8. Method as claimed in at least any one of claims 1 to 7,
**characterized in that** the first method for cornering detection is integrated into a method for detecting tire pressure loss on the basis of wheel speed information, and the first method for cornering detection is taken into consideration especially for activating and/or deactivating said pressure loss detection method.

9. Method as claimed in claim 8,
**characterized in that** the driving parameters as claimed in any one of claims 6 or 7 are taken into consideration for activating and/or deactivating.

10. Computer program product for executing all steps of a straight-ahead driving detection method as claimed in any one of claims 1 to 9.

## Revendications

1. Procédé de reconnaissance de la conduite en ligne droite selon un premier procédé de reconnaissance de la conduite en ligne droite sur la base d'informations relatives à la vitesse de rotation des roues, une grandeur caractéristique de la courbe étant formée à partir d'informations relatives à la vitesse de rotation des roues d'un ou de plusieurs essieux, et pour déterminer la grandeur caractéristique de la courbe, la valeur inverse du rayon de la courbe étant calculée à partir des informations relatives à la vitesse de rotation des roues, **caractérisé en ce qu'**un apprentissage de la grandeur caractéristique de la courbe est exécuté au cours d'une phase d'apprentissage, en particulier dans des situations sélectionnées de conduite, la grandeur caractéristique de la courbe étant introduite individuellement pour plusieurs intervalles de vitesse.

2. Procédé selon la revendication 1, **caractérisé en ce qu'**on fait la moyenne et/ou filtre la grandeur caractéristique de la courbe déterminée à l'instant.

3. Procédé selon la revendication 1 ou 2, **caractérisé en ce qu'**on fait la moyenne et/ou filtre la grandeur caractéristique de la courbe introduite par apprentissage.

4. Procédé selon l'une au moins des revendications 1 à 3, **caractérisé en ce que** la grandeur caractéristique de la courbe est introduite par apprentissage dans la situation de conduite "conduite en ligne droite", un deuxième procédé de reconnaissance de conduite en ligne droite étant utilisé pour reconnaître cet état de conduite.

5. Procédé selon l'une au moins des revendications 1 à 4, **caractérisé en ce que** dans le cas d'une reconnaissance d'une conduite en courbe par le deuxième procédé de reconnaissance de conduite en ligne droite, les valeurs déjà introduites par apprentissage du premier procédé de reconnaissance de conduite en ligne droite sont rejetées.

6. Procédé selon l'une au moins des revendications 1 à 5, **caractérisé en ce que** la/les grandeur/s caractéristique/s de la courbe introduite/s par apprentissage est/sont utilisée/s pour le calcul de paramètres de conduite, tels que l'embardée du véhicule et/ou son accélération transversale.

7. Procédé selon l'une au moins des revendications 1 à 6, **caractérisé en ce que** la grandeur caractéristique de la courbe introduite par apprentissage est utilisée pour le calcul du paramètre de conduite "rayon de courbe effectif".

8. Procédé selon l'une au moins des revendications 1 à 7, **caractérisé en ce que** le premier procédé de reconnaissance de la conduite en courbe est intégré dans un procédé de reconnaissance d'une perte de pression des pneus sur la base d'informations relatives à la vitesse de rotation des roues, et le premier procédé de reconnaissance de la conduite en courbe est utilisé en particulier pour activer et/ou désactiver ce procédé de reconnaissance de la perte de pression.

9. Procédé selon la revendication 8, **caractérisé en ce que** pour l'activation et/ou la désactivation on utilise les paramètres de conduite selon l'une des revendications 6 ou 7.

10. Produit de programme d'ordinateur pour la mise en oeuvre de toutes les étapes d'un procédé de reconnaissance de conduite en ligne droite selon l'une des revendications 1 à 9.
